(19) Europäisches Patentamt

European Patent Office

Office européen des brevets

(11) **EP 0 757 068 B1**

(12) **EUROPÄISCHE PATENTSCHRIFT**

(45) Veröffentlichungstag und Bekanntmachung des Hinweises auf die Patenterteilung:
**29.12.1999 Patentblatt 1999/52**

(51) Int Cl.[6]: **C08G 18/28**

(21) Anmeldenummer: **96111811.4**

(22) Anmeldetag: **23.07.1996**

(54) **Flammgeschützte Hartschaumstoffe auf Isocyanatbasis**

Flame retardant rigid foams based on isocyanate

Mousses ignifuges rigides à base d'isocyanate

(84) Benannte Vertragsstaaten:
**AT BE CH DE DK ES FR GB GR IT LI LU NL PT SE**

(30) Priorität: **03.08.1995 DE 19528537**

(43) Veröffentlichungstag der Anmeldung:
**05.02.1997 Patentblatt 1997/06**

(73) Patentinhaber: **BASF Aktiengesellschaft**
**67063 Ludwigshafen (DE)**

(72) Erfinder:
- **Von Malotki, Peter, Dr.**
  **01936 Cosel (DE)**
- **Hensiek, Rainer**
  **49328 Melle (DE)**
- **Reichelt, Michael**
  **01945 Ruhland (DE)**

(56) Entgegenhaltungen:
EP-A- 0 240 806          US-A- 4 407 981
US-A- 4 734 443          US-A- 5 135 961

## Beschreibung

Die Erfindung betrifft flammgeschützte Hartschaumstoffe auf Isocyanatbasis sowie ein Verfahren zur Herstellung dieser flammgeschützten Hartschaumstoffe auf Isocyanatbasis durch Umsetzung von

    a) organischen und/oder modifizierten organischen Polyisocyanaten mit

    b) mindestens einer gegenüber Isocyanaten reaktive Wasserstoffatome aufweisenden Verbindung und gegebenenfalls

    c) niedermolekularen Kettenverlängerungs- und/oder Vernetzungsmitteln

in Gegenwart von

    d) Treibmitteln

    e) Katalysatoren

    f) mindestens einem bromhaltigen Flammschutzmittel sowie gegebenenfalls

    g) weiteren Hilfsmitteln und/oder Zusatzstoffen

Die Erfindung betrifft weiterhin die Verwendung der nach diesem Verfahren hergestellten Hartschaumstoffe auf Isocyanatbasis als Dämmstoffe.

Hartschaumstoffe auf Isocyanatbasis, insbesondere Polyurethan- und Isocyanuratschaumstoffe, sind seit langem bekannt und werden vorwiegend zur Wärme- oder Kälteisolation, z.B. in Kühlgeräten, im Bauwesen, in Warmwasserspeichern und Fernwärmerohren, benutzt.

Eine zusammenfassende Übersicht über die Herstellung und Verwendung von Hartschaumstoffen auf Isocyanatbasis wurde beispielsweise publiziert in Polyurethane, Kunststoffhandbuch, Band 7, 1. Auflage 1966, herausgegeben von R. Vieweg und A. Höchtlen, 2. Auflage 1983, herausgegeben von G.Oertel, und 3. Auflage 1993, herausgegeben von G.Becker und D. Braun, Carl Hanser Verlag, München, Wien.

Als Treibmittel zur Herstellung dieser Schaumstoffe setzte man bis in die jüngste Zeit Fluorchlorkohlenwasserstoffe (FCKW), vor allem das Trichlorfluormethan, ein. Diese FCKW müssen wegen ihrer zerstörenden Wirkung auf die globale Ozonschicht durch Stoffe substituiert werden, die kein diese Ozonschicht schädigendes Potential und einen möglichst geringen Treibhauseffekt aufweisen. Außerdem ist zu erwarten, daß - zumindest in einigen Jahren - nur noch halogenfreie Treibmittel oder Treibmittelgemische eingesetzt werden sollen.

Mit dem Austausch von FCKW durch alternative Blähmittel, wie HFCKW, HFKW, $CO_2$ und Kohlenwasserstoffe erhöht sich der Aufwand, der zur Erreichung eines gleichbleibend guten Brandschutzverhalten betrieben werden muß. Dies äußert sich in höheren Mengen Flammschutzmittel, die den Formulierungen zugefügt werden müssen. Die Suche nach effizienten Flammschutzmitteln ist daher eine wichtige technische Aufgabe.

Neben Chlor- und Phosphorverbindungen sind Bromverbindungen hochwirksame Flammschutzmittel für Hartschaumstoffe auf Isocyanatbasis. Wegen seines hohen Bromgehaltes ist Tribromneopentylalkohol (2-Brommethyl-2-hydroxymethyl-1,3-dibrompropan) eine besonders wirksame Verbindung. Tribromneopentylalkohol als Flammschutzmittel für Polyurethanschäume ist aus den Patentschriften BE 815438, DE-A-1595474, DE-A-2732996, EP-B-240806, JP-A-05105811, US-A-3932541, US-A-4052346, US-A-4194068 und US-A-4511688 bekannt. Nachteilig an der Verwendung von Tribromneopentylalkohol als Flammschutzmittel direkt und auch als Synthesebaustein für andere Flammschutzmittel ist dessen geringe Funktionalität als Monool, die sowohl bei der Reaktion mit Isocyanaten als auch z.B. bei der Veresterung mit Polycarbonsäuren zum Kettenabbruch führt. Dies hat verminderte mechanische Festigkeiten der ausgehärteten Schaumstoffe und insbesondere starke Verzögerungen im Aushärteprozeß bei der Schaumstoffherstellung zur Folge. Speziell der letztere Mangel führt zu Qualitätsproblemen und Produktivitätsverlusten bei diskontinuierlichen und kontinuierlichen Verfahren zur Dämmstoffherstellung. Besonders drastisch tritt dieser Effekt bei fluorchlorkohlenstoffrei geblähten Hartschaumstoffen auf Isocyantbasis auf, bei denen eine vergleichsweise hohe Flammschutzmittelmenge eingesetzt werden muß.

Der vorliegenden Erfindung lag deshalb die Aufgabe zugrunde, flammgeschützte, fluorchlorkohlenstoffrei geblähte Hartschaumstoffe auf Isocyanatbasis bei Verwendung bromhaltiger Flammschutzmittel aufzuzeigen, bei denen die Nachteile des Standes der Technik weitgehend vermieden und die mechanischen und physikalischen Eigenschaften nicht negativ beeinflußt werden, ohne daß das Brandverhalten verschlechtert wird.

Diese Aufgabe wurde erfindungsgemäß dadurch gelöst, daß zur Flammfestmachung von Hartschaumstoffen auf Isocyanatbasis als bromhaltiges Flammschutzmittel überwiegend Tribromneopentylalkohol eingesetzt wird und daß der Vernetzungsindex aller gegenüber Isocyanaten reaktive Wasserstoffatome aufweisenden Verbindungen einschließlich des bromhaltigen Flammschutzmittels mindestens 3,0 beträgt.

Gegenstände der Erfindung sind demzufolge flammgeschützte Hartschaumstoffe auf Isocyanatbasis sowie ein Verfahren zur Herstellung dieser flammgeschützten Hartschaumstoffe auf Isocyanatbasis durch Umsetzung von

a) organischen und/oder modifizierten organischen Polyisocyanaten mit

b) mindestens einer gegenüber Isocyanaten reaktive Wasserstoffatome aufweisenden Verbindung und gegebenenfalls

c) niedermolekularen Kettenverlängerungs- und/oder Vernetzungsmitteln

in Gegenwart von

d) Treibmitteln,

e) Katalysatoren

f) mindestens einem bromhaltigen Flammschutzmittel sowie gegebenenfalls

g) weiteren Hilfsmitteln und/oder Zusatzstoffen,

dadurch gekennzeichnet, daß als bromhaltiges Flammschutzmittel überwiegend Tribromneopentylalkohol eingesetzt wird und daß der Vernetzungsindex aller gegenüber Isocyanaten reaktive Wasserstoffatome aufweisenden Verbindungen einschließlich des bromhaltigen Flammschutzmittels mindestens 3,0 beträgt.

Gegenstand der Erfindung ist weiterhin die Verwendung der nach diesem Verfahren hergestellten Hartschaumstoffe auf Isocyanatbasis als Dämmstoffe.

Es war überraschend, daß Schaumstofformulierungen die oben aufgeführten Nachteile des Standes der Technik nicht aufweisen, wenn sie neben dem Einsatz von Tribromneopentylalkohol als bromhaltigem Flammschutzmittel einen besonders hohen Vernetzungsindex $I_V$ besitzen.

Als Vernetzungsindex im Sinne dieser Erfindung wird eine dimensionslose Kennziffer verstanden, die das Venetzungsvermögen der Gesamtheit aller Verbindungen, die zur Reaktion mit der Isocyanatkomponente befähigte Wasserstoffatome tragen, beschreibt. Der Vernetzungsindex $I_V$ wird nach folgender Formel berechnet:

$$I_V = \frac{\Sigma \, (m_1 \cdot Z_1 \cdot f_1 + m_2 \cdot Z_2 \cdot f_2 + \ldots + m_n \cdot Z_n \cdot f_n)}{\Sigma \, (m_1 \cdot Z_1 + m_2 \cdot Z_2 + \ldots + m_n \cdot Z_n)},$$

wobei die einzelnen Symbole folgende Bedeutung haben:

$I_V$          Vernetzungsindex,

$m_1, m_2, \ldots m_n$      Masseanteile aller Verbindungen, die zur Reaktion mit der Isocyantkomponente befähigte Wasserstoffatome tragen,

$Z_1, Z_2, \ldots Z_n$      Hydroxylzahlen aller Verbindungen, die zur Reaktion mit der Isocyantkomponente befähigte Wasserstoffatome tragen,

$f_1, f_2, \ldots f_n$      Funktionalitäten aller Verbindungen, die zur Reaktion mit der Isocyantkomponente befähigte Wasserstoffatome tragen.

Erfahrungsgemäß wäre zu erwarten gewesen, daß bei Anwesenheit des monofunktionellen Tribromneopentylalkohols im schaumbildenden Reaktionsgemisch insbesondere die Aushärtung soweit verschlechtert wird, daß eine bestimmungsgemäße Verarbeitung des Schaumsystems nicht oder nur unter großen Schwierigkeiten möglich sei.

Es sind Formulierungen bevorzugt, bei denen das bromhaltige Flammschutzmittel mindestens zu 80 Gew.-% und besonders bevorzugt zu mindestens 95 Gew.-% Tribromneopentylalkohol enthält und der Vernetzungsindex mindestens 3,2 und besonders bevorzugt mindestens 3,3 beträgt.

Für die erfindungsgemäße Flammfestausrüstung eignen sich prinzipiell alle an sich bekannten Hartschaumstoffe auf Isocyanatbasis, die nach den an sich üblichen Verfahren hergestellt werden können, sofern sie den erfindungsgemäß erforderlichen Vernetzungsindex von mindestens 3,0 erreichen. Besonders vorteilhafte Ergebnisse haben sich bei Polyurethan- und Isocyanurathartschaumstoffen ergeben.

Zur Herstellung der Hartschaumstoffe auf Isocyanatbasis nach dem erfindungsgemäßen Verfahren finden, mit Ausnahme der Flammschutzmittel (f), die an sich bekannten Aufbaukomponenten Verwendung, zu denen im eizelnen folgendes auszuführen ist.

a) Als organische und/oder modifizierte organische Polyisocyanate (a) kommen die an sich bekannten aliphatischen, cycloaliphatischen, araliphatischen und vorzugsweise die aromatischen mehrwertigen Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, I-Isocyanato-3,3,5-trimethyl-5-isocyanatomethyl-cyclohexan (Isophoron-diisocyanat), 2,4- und 2,6-Hexahydrotoluylendiisocyanat sowie die entsprechenden Isomerengemische, 4,4'-, 2,2'- und 2,4'-Dicyclohexylmethan-diisocyanat sowie die entsprechenden Isomerengemische, und vorzugsweise aromatische Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenyl-methan-diisocyanat, Roh-MDI, 2,4- und/oder 2,6-Toluylen-diisocyanat gegebenenfalls gemischt werden.

Besonders bewährt als Isocyanate haben sich Diphenylmethandiisocyanat-Isomerengemische oder Roh-MDI und insbesondere Roh-MDI mit einem Diphenylmethan-diisocyanat-Isomerengehalt von 33 bis 55 Gew.-% sowie urethangruppenhaltige Polyisocyanatgemische auf Basis von Diphenylmethan-diisocyanat mit einem NCO-Gehalt von 15 bis 33 Gew.-%.

b) Als gegenüber Isocyanaten reaktive Wasserstoffatome aufweisende Verbindungen (b) kommen solche in Frage, die zwei oder mehrere reaktive Gruppen, ausgewählt aus OH-Gruppen, SH-Gruppen, NH-Gruppen, $NH_2$-Gruppen und CH-aciden Gruppen, im Molekül tragen.

Es werden zweckmäßigerweise solche mit einer Funktionalität von 2 bis 8, vorzugsweise 3 bis 8, und einem mittleren Molekulargewicht von 250 bis 8000, vorzugsweise von 300 bis 2000 verwendet. Bewährt haben sich z. B. Polyether-polyamine und/ oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole. Der Hydroxylzahl der Polyhydroxylverbindungen beträgt dabei in aller Regel 150 bis 850 und vorzugsweise 200 bis 600.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z. B. ε-Caprolacton oder Hydroxycarbonsäuren, z.B. ω-Hydroxycapronsäure.

Zur Herstellung der Polyester-polyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphare aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen vorzugsweise eine Funktionalität von 2 bis 4, insbesondere 2 bis 3, und ein Molekulargewicht von 250 bis 3000, vorzugsweise 300 bis 2000.

Insbesondere als Polyole verwendet werden jedoch Polyether-polyole, die nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 3 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.

Die Polyether-polyole, vorzugsweise Polyoxypropylen- und Polyoxypropylen-polyoxyethylen-polyole, besitzen eine Funktionalität von vorzugsweise 2 bis 8 und insbesondere 3 bis 5 und Molekulargewichte von 250 bis 8000, vorzugsweise 300 bis 1500 und insbesondere 350 bis 1100, und geeignete Polyoxytetramethylen-glykole ein Molekulargewicht bis ungefähr 3500.

Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z. B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.

Die Polyether-polyole können ebenso wie die Polyester-polyole einzeln oder in Form von Mischungen verwendet werden. Ferner können sie mit den Pfropf-polyether-polyolen oder Polyesterpolyolen sowie den hydroxylgruppenhaltigen Polyesteramiden, Polyacetalen, Polycarbonaten und/oder Polyether-polyaminen gemischt werden.

Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).

Weiterhin können Polyole verwendet werden, bei denen die Hydroxylgruppen zumindest teilweise durch CH-acide Gruppen ausgetauscht sind.

c) Die Hartschaumstoffe auf Isocyanatbasis können ohne oder unter Mitverwendung von Kettenverlängerungs- und/oder Vernetzungsmitteln (c) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 250, vorzugsweise von 60 bis 200. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern zur Herstellung der Polyurethan-Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der höhermolekularen Verbindungen (b), zum Einsatz.

d) Zu Treibmitteln (d), welche zur Herstellung der Hartschaumstoffe verwendet werden können, gehören beispielsweise Wasser, das mit Isocyanatgruppen unter Bildung von Kohlendioxid reagiert, und/oder physikalisch wirkende Treibmittel. Geeignet sind Flüssigkeiten, welche gegenüber den organischen, gegebenenfalls modifizierten Polyisocyanaten inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise in Betracht kommen Wasser, Tertiärbutanol, Carbonsäuren, insbesondere Ameisensäure, niedrigsiedende Flüssigkeiten, wie Ether, Ester, Ketone und Kohlenwasserstoffe, insbesondere n-Pentan, iso-Pentan, Cyclopentan und 2,2-Dimethylpropan.

e) Als Katalysatoren (e) zur Herstellung der Hartschaumstoffe werden insbesondere Verbindungen verwendet, die die Reaktion der reaktive Wasserstoffatome, insbesondere Hydroxylgruppen, enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N', N'-Tetramethyl-butandiamin, N,N,N',N'-Tetramethyl-hexandiamin-1,6, Pentamethyl-diethylentriamin, Tetramethyl-diaminoethylether, Bis-(dimethylaminopropyl)-harnstoff, Dimethylpiperazin, 1,2-Dimethyl-imidazol, 1-Aza-bicyclo-(3,3,0)-octan und vorzugsweise 1,4-Diaza-bicyclo-(2,2,2)--octan, und Alkanolaminverbindungen, wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumsalze, wie z.B. N,N,N-Trimethyl-N-2-hydroxypropyl-formiat, N,N,N-Trimethyl-N-2-hydroxypropyl-2-ethylhexanoat, Tetraalkylammoniumhydroxide, wie Tetramethylammoniumhydroxid, Alkalihydroxide, wie Natriumhydroxid, und Alkalialkoholate, wie Natriummethylat und Kaliumisopropylat, sowie Alkalisalze oder Erdalkalisalze von Fettsäuren mit 1 bis 20 C-Atomen und gegebenenfalls seitenständigen OH-Gruppen.

Vorzugsweise werden tertiäre Amine, Zinn- und Bismutumverbindungen, Alkali- und Erdalkalicarboxylate, quaternäre Ammoniumsalze, s-Hexahydrotriazine und Tris- (dialkylaminomethyl)-phenole eingesetzt.

Es werden vorzugsweise 0,001 bis 5 Gew.-%, insbesondere 0,05 bis 2 Gew.-%, Katalysator bzw. Katalysatorkombination, bezogen auf das Gewicht der Komponente (b) verwendet.

f) Erfindungsgemäß wird als Flammschutzmittel überwiegend Tribromneopentylalkohol eingesetzt. Bromhaltige Flammschutzmittel, die neben Tribromneopentylalkohol in geringen Mengen mitverwendet werden können, sind beispielsweise Umsetzungsprodukte von Tribromneopentylalkohol, Dibromneopentylglykol und dessen Umsetzungsprodukte, Dibrombutendiol und dessen Umsetzungsprodukte, 2,3-Dibrompropanol und dessen Umsetzungsprodukte, Tetrabromphthalsäureanhydrid und dessen Umsetzungsprodukte, Tribromphenol und dessen Umsetzungsprodukte, Tetrabrombisphenol A und dessen Umsetzungsprodukte, bromhaltige Phosphorsäureester und bromierte Kohlenwasserstoffe.

Neben den bromhaltigen Flammschutzmitteln können auch die sonstigen, für die Herstellung von Hartschaumstoffen auf Isocyanatbasis bekannten. nicht bromhaltigen Flammschutzmittel zum Einsatz kommen.

Geeignete Flammschutzmittel sind beispielsweise Diphenylkresylphosphat, Trikresylphosphat, Triethyl- oder Tributylphosphat, Tris-(2-chlorethyl)phosphat, Tris-(2-chlorpropyl)phosphat, Tris(1,3-dichlorpropyl)phosphat, Tetrakis-(2-chlorethyl)-ethylendiphosphat, Diethylethanphosphonat, Diethanolaminomethylphosphonsäurediethylester.

Außer den bereits genannten Phosphorverbindungen können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, insgesamt 5 bis 150 Gew.-Teile, vorzugsweise 30 bis 100 Gew.-Teile, Flammschutzmittel für jeweils 100 Gew.-Teile der Komponente (b) zu verwenden.

g) Der Reaktionsmischung zur Herstellung der Hartschaumstoffe auf Isocyanatbasis können gegebenenfalls weitere Hilfsmittel und/oder Zusatzstoffe (g) einverleibt werden. Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, insbesondere solche auf Silikonbasis, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als Füllstoffe, insbesondere verstärkend wirkende Füllstoffe, sind die an sich bekannten, üblichen organischen und anorganischen Füllstoffe, Verstärkungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Die anorganischen und organischen Füllstoffe können einzeln oder als Gemische verwendet werden und werden der Reaktionsmischung vorteilhafterweise in Mengen von 0,5 bis 30 Gew.%, vorzugsweise 1 bis 15 Gew.%, bezogen auf das Gewicht der Komponenten (a) bis (c), einverleibt, wobei jedoch der Gehalt an Matten, Vliesen und Geweben aus natürlichen und synthetischen Fasern Werte bis 80 erreichen kann.

Nähere Angaben über oben genannte und weitere Ausgangsstoffe sind der Fachliteratur, beispielsweise der Monographie von J. H. Saunders und K. C. Frisch "High Polymers" Band XVI, Polyurethanes Teil 1 und 2, Verlag Interscience Publishers 1962 bzw. 1964 oder dem Kunststoffhandbuch, Polyurethane, Band 7, Carl-Hanser- Verlag, München, Wien, 1., 2. und 3. Auflage, 1966, 1983 und 1993 zu entnehmen.

Bei den erfindungsgemäßen Hartschaumstoffen auf Isocyanatbasis handelt es sich vor allem um solche, die als charakteristische chemische Strukturelemente Urethan- und/oder Isocyanurat- und/ oder Biuret- und/oder Allophanat- und/oder Uretdion und/oder Harnstoff- und/oder Carbodiimidgruppen enthalten.

Zur Herstellung der Hartschaumstoffe auf Isocyanatbasis werden die organischen und/oder modifizierten organischen Polyisocyanate (a), die gegenüber Isocyanaten reaktive Wasserstoffatome aufweisenden Verbindungen (b) und gegebenenfalls Kettenverlängerungs- und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 0,85 bis 1,25:1, vorzugsweise 0,95 bis 1,15:1 und insbesondere 1 bis 1,05:1, beträgt.Falls die Hartschaumstoffe zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) von 1,5 bis 60:1, vorzugsweise 1,5 bis 8:1 angewandt.

Hartschaumstoffen auf Isocyanatbasis werden vorzugsweise nach dem Gieß- oder Sprühverfahren hergestellt. Insbesondere werden dabei die Block- oder Formverschäumung oder die kontinuierliche Fertigung nach dem Doppeltransportbandverfahren angewendet. Als besonders vorteilhaft hat es sich erwiesen, nach dem Zweikomponenten-Verfahren zu arbeiten und die Aufbaukomponenten (b), (d), (e), (f) und gegebenenfalls (c) und (g) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht.

In geschlossenen Formen kann auch mehr schaumbildendes Reaktionsgemisch verwendet werden, als zur vollständigen Ausfüllung der Form erforderlich ist. Man erhält dann verdichtete Schaumstoffe.

Die nach dem erfindungsgemäßen Verfahren hergestellten Hartschaumstoffe oder Hartformschaumstoffe weisen eine Dichte von 0,02 bis 0,75 $g/cm^3$, vorzugsweise von 0,025 bis 0,24 $g/cm^3$ und insbesondere von 0,03 bis 0,1 $g/cm^3$, auf.

Besonders eignen sie sich als Isolationsmaterial im Bausektor, z.B. als Zwischenschicht für Sandwichelemente oder als Dämmplatten zur thermischen Isolierung von Fußböden, Wänden, Decken, Dächern und Rohrleitungen.

Im Fahrzeugbau, insbesondere im Schienenfahrzeug-, im Straßenfahrzeug- und im Schiffbau, können diese Schaumstoffe ebenfalls zu Isolationszwecken verwendet werden.

Die Produkte finden vorzugsweise als wärmedämmende Baustoffe Anwendung.

Die Erfindung wird in den nachfolgenden Ausführungsbeispielen näher erläutert.

Bei den verwendeten Ausgangsstoffen bedeuten:

| | |
|---|---|
| Polyol 1: | Polyetheralkohol auf Basis Saccharose, Glycerol und Propylenoxid |
| Polyol 2: | Polyetheralkohol auf Basis Saccharose, Glycerol und Propylenoxid |
| Polyol 3: | Polyetheralkohol auf Basis von Trimethylolpropan und Propylenoxid |
| Polyol 4: | Polyesteralkohol auf der Basis von Phthalsäureanhydrid und Diethylenglykol |
| Polyol 5: | Polyetheralkohol auf Basis Sorbit, Propylenglykol und Propylenoxid |
| Flammschutzmittel 1: | Chlor und Brom entaltender Polyetheralkohol (Ixol B 251 der Fa.Solvay) |
| Flammschutzmittel 2: | Tris-(chlorpropyl)-phosphat |
| Schaumstabilisator 1: | Tensid auf siliciumorganischer Basis (OS 340 der Fa.Bayer AG) |

Ausführungsbeispiele 1 - 6 und Vergleichsbeispiele 1 - 4:

Die Formulierungen für die verwendeten Polyolabmischungen sind in Tabelle 1 zusammengefaßt. Die Polyolabmischungen hatten jeweils eine Hydroxylzahl von ca. 320 mgKOH/g.

Von den in Tabelle 1 aufgeführten Formulierungen wurde jeweils ein Ansatz von 200 kg in einem Rührbehälter hergestellt. Es wurde bis zum vollständigem Auflösen des Tribromneopentylalkohols gerührt und danach filtriert. Die Verarbeitung erfolgte auf einer 12 m-Doppeltransportbandanlage nach folgender Rezeptur:

100 Gewichtsteile Polyolabmischung,

9 Gewichtsteile Blähmittel Dichlorfluorethan (R 141b),

150 Gewichtsteile Diphenylmethandiisocyanat-Rohprodukt (NCO-Gehalt: 31,1%, Viskosität 512 mPas).

Es wurde Plattenware mit einer Stärke von 150 mm hergestellt. Zur Beurteilung der Versuchsergebnisse wurden die Aushärtung beim Verlassen des Doppeltransportbandes und die Rißanfälligkeit nach dem Ablängen der Platten beobachtet. Weiterhin wurde das Brandverhalten des Hartschaumes nach DIN 4102 überprüft. Die Ergebnisse sind in Tabelle 2 zusammengefaßt.

Ausführungsbeispiel 7 und Vergleichsbeispiel 5:

Die Formulierungen für die verwendeten Polyolabmischungen sind in Tabelle 3 zusammengefaßt. Die Polyolabmischungen hatten jeweils eine Hydroxylzahl von ca. 280 mgKOH/g.

Von den in Tabelle 3 aufgeführten Formulierungen wurde jeweils ein Ansatz von 200 kg in einem Rührbehälter hergestellt. Es wurde bis zum vollständigem Auflösen des Tribromneopentylalkohols gerührt und danach filtriert. Die Verarbeitung erfolgte auf einer 12 m-Doppeltransportbandanlage nach folgender Rezeptur:

100 Gewichtsteile Polyolabmischung

7 Gewichtsteile Blähmittel Dichlorfluorethan (R 141b)

135 Gewichtsteile Diphenylmethandiisocyanat-Rohprodukt (NCO-Gehalt: 31,1%, Viskosität 512 mPas).

Es wurde Plattenware mit einer Stärke von 150 mm hergestellt. Zur Beurteilung der Versuchsergebnisse wurden die Aushärtung beim Verlassen des Doppeltransportbandes und die Rißanfälligkeit nach dem Ablängen der Platten beobachtet. Weiterhin wurde das Brandverhalten des Hartschaumes nach DIN 4102 überprüft. Die Ergebnisse sind in Tabelle 4 zusammengefaßt.

Tabelle 1

| | Hydroxyl-zahl ($Z_i$) | Funktio-nalität ($f_i$) | Beispiel 1 | Beispiel 2 | Beispiel 3 | Beispiel 4 | Beispiel 5 | Beispiel 6 |
|---|---|---|---|---|---|---|---|---|
| Polyol 1 | 397 | 4,3 | | 51,1 | 51,2 | 26,5 | 35,6 | 29,6 |
| Polyol 2 | 495 | 4,3 | 43,0 | | | 26,5 | | |
| Polyol 3 | 445 | 3,0 | | | | | | |
| Polyol 4 | 242 | 2,0 | 10,0 | | | | | 10,0 |
| Polyol 5 | 493 | 5,3 | | | | | 15,0 | 10,0 |
| Tribromneopentylalkohol | 172 | 1,0 | 12,0 | 12,0 | 12,0 | 12,0 | 11,0 | 11,0 |
| Flammschutzmittel 1 | 330 | 3,0 | | | | | 2,0 | 2,0 |
| Flammschutzmittel 2 | | | 27,0 | 27,0 | 27,0 | 27,0 | 27,0 | 27,0 |
| Glycerol | 1805 | 3,0 | 3,6 | 5,5 | 5,4 | 3,6 | 5,0 | 6,0 |
| Schaumstabilisator 1 | | | 1,0 | 1,0 | 1,0 | 1,0 | 1,0 | 1,0 |
| Dimethylcyclohexylamin | | | 1,5 | 1,5 | 1,5 | 1,5 | 1,5 | 1,5 |
| Wasser | 6230 | 2,0 | 1,9 | 1,9 | 1,9 | 1,9 | 1,9 | 1,9 |
| Summe | | | 100,0 | 100,0 | 100,0 | 100,0 | 100,0 | 100,0 |
| Vernetzungsindex ($I_v$) | | | 3,20 | 3,23 | 3,23 | 3,33 | 3,43 | 3,19 |

Tabelle 1 (Fortsetzung)

| | Hydroxylzahl $(Z_i)$ | Funktionalität $(f_i)$ | Vergleich 1 | Vergleich 2 | Vergleich 3 | Vergleich 4 |
|---|---|---|---|---|---|---|
| Polyol 1 | 397 | 4,3 | | | | |
| Polyol 2 | 495 | 4,3 | 25,2 | 13,2 | | |
| Polyol 3 | 445 | 3,0 | | 10,0 | 53,0 | 51,6 |
| Polyol 4 | 242 | 2,0 | 25,0 | 25,0 | | |
| Polyol 5 | 493 | 5,3 | | | | |
| Tribromneopentylalkohol | 172 | 1,0 | 12,0 | 11,0 | 12,0 | |
| Flammschutzmittel 1 | 330 | 3,0 | | 2,0 | | 25,0 |
| Flammschutzmittel 2 | | | 27,0 | 27,0 | 27,0 | 14,0 |
| Glycerol | 1805 | 3,0 | 6,4 | 7,4 | 3,6 | 5,0 |
| Schaumstabilisator 1 | | | 1,0 | 1,0 | 1,0 | 1,0 |
| Dimethylcyclohexylamin | | | 1,5 | 1,5 | 1,5 | 1,5 |
| Wasser | 6230 | 2,0 | 1,9 | 1,9 | 1,9 | 1,9 |
| Summe | | | 100,0 | 100,0 | 100,0 | 100,0 |
| Vernetzungsindex $(I_v)$ | | | 2,86 | 2,70 | 2,63 | 2,77 |

EP 0 757 068 B1

Tabelle 2

| | Beispiel 1 | Beispiel 2 | Beispiel 3 | Beispiel 4 | Beispiel 5 | Beispiel 6 |
|---|---|---|---|---|---|---|
| Brandverhalten DIN 4102 | B2 | B2 | B2 | B2 | B2 | B2 |
| Aushärtung am Bandende | gut | gut | gut | gut | sehr gut | gut |
| Rißanfälligkeit | keine | keine | keine | keine | keine | keine |

Tabelle 2 (Fortsetzung)

| | Vergleich 1 | Vergleich 2 | Vergleich 3 | Vergleich 4 |
|---|---|---|---|---|
| Brandverhalten DIN 4102 | B2 | B2 | B2 | B2 |
| Aushärtung am Bandende | gering | gering | sehr gering | gering |
| Rißanfälligkeit | am Sägeschnitt | im Schaum | im Schaum | im Schaum |

EP 0 757 068 B1

Tabelle 3

| | Hydroxylzahl $(Z_i)$ | Funktionalität $(f_i)$ | Beispiel 7 | Vergleich 5 |
|---|---|---|---|---|
| Polyol 1 | 397 | 4,3 | 45,8 | |
| Polyol 2 | 495 | 4,3 | | 23,0 |
| Polyol 4 | 242 | 2,0 | | 22,0 |
| Tribromneopentylalkohol | 172 | 1,0 | 15,0 | 15,0 |
| Flammschutzmittel 2 | | | 30,0 | 30,0 |
| Glycerol | 1805 | 3,0 | 4,5 | 5,3 |
| Schaumstabilisator 1 | | | 1,0 | 1,0 |
| Dimethylcyclohexylamin | | | 2,0 | 2,0 |
| Wasser | 6230 | 2,0 | 1,7 | 1,7 |
| Summe | | | 100,0 | 100,0 |
| Vernetzungsindex $(I_v)$ | | | 3,20 | 2,84 |

EP 0 757 068 B1

Tabelle 4

| | Beispiel 7 | Vergleich 5 |
|---|---|---|
| Brandverhalten DIN 4102 | B2 | B2 |
| Aushärtung am Bandende | gut | gering |
| Rißanfälligkeit | keine | im Schaum |

**Patentansprüche**

1. Flammgeschützte Hartschaumstoffe auf Isocyanatbasis, herstellbar durch Umsetzung von

   a) organischen und/oder modifizierten organischen Polyisocyanaten mit

   b) mindestens einer gegenüber Isocyanaten reaktive Wasserstoffatome aufweisenden Verbindung und gegebenenfalls

   c) niedermolekularen Kettenverlängerungs- und/oder Vernetzungsmitteln

   in Gegenwart von

   d) Treibmitteln,

   e) Katalysatoren

   f) mindestens einem bromhaltigen Flammschutzmittel sowie gegebenenfalls

   g) weiteren Hilfsmitteln und/oder Zusatzstoffen,

   dadurch gekennzeichnet, daß als bromhaltiges Flammschutzmittel Tribromneopentylalkohol eingesetzt wird und daß der Vernetzungsindex aller gegenüber Isocyanaten reaktive Wasserstoffatome aufweisenden Verbindungen einschließlich des bromhaltigen Flammschutzmittels mindestens 3,0 beträgt.

2. Flammgeschützte Hartschaumstoffe nach Anspruch 1, dadurch gekennzeichnet, daß neben Tribromneopentylalkohol weitere bromhaltige Flammschutzmittel mitverwendet werden können.

3. Flammgeschützte Hartschaumstoffe nach Anspruch 1 oder 2, dadurch gekennzeichnet, daß das bromhaltige Flammschutzmittel zu mindestens 80 Gew.-% aus Tribromneopentylalkohol besteht.

4. Flammgeschützte Hartschaumstoffe nach einem der Ansprüche 1 bis 3, dadurch gekennzeichnet, daß der Anteil der bromhaltigen Flammschutzmittel, bezogen auf den Gesamtansatz 2 bis 15 Gew.-%, vorzugsweise 4 bis 8 Gew.-%, beträgt.

5. Flammgeschützte Hartschaumstoffe nach einem der Ansprüche 1 bis 4, dadurch gekennzeichnet, daß neben den bromhaltigen Flammschutzmitteln weitere nicht bromhaltige Flammschutzmittel mitverwendet werden können.

6. Verfahren zur Herstellung von flammgeschützten Hartschaumstoffen auf Isocyanatbasis durch Umsetzung von

   a) organischen und/oder modifizierten organischen Polyisocyanaten mit

   b) mindestens einer gegenüber Isocyanaten reaktive Wasserstoffatome aufweisenden Verbindung und gegebenenfalls

   c) niedermolekularen Kettenverlängerungs- und/oder Vernetzungsmitteln

   in Gegenwart von

   d) Treibmitteln,

   e) Katalysatoren

   f) mindestens einem bromhaltigen Flammschutzmittel sowie gegebenenfalls

   g) weiteren Hilfsmitteln und/oder Zusatzstoffen,

   dadurch gekennzeichnet, daß als bromhaltiges Flammschutzmittel Tribromneopentylalkohol eingesetzt wird und daß der Vernetzungsindex aller gegenüber Isocyanaten reaktive Wasserstoffatome aufweisenden Verbindungen einschließlich des bromhaltigen Flammschutzmittels mindestens 3,0 beträgt.

7. Verwendung der flammgeschützten Hartschaumstoffen auf Isocyanatbasis gemäß Anspruch 1 als Dämmstoffe.

**Claims**

1. A flame-resistant rigid foam based on isocyanate, able to be produced by reacting

   a) organic and/or modified organic polyisocyanates with

   b) at least one compound containing hydrogen atoms reactive toward isocyanates and, if desired,

   c) low molecular weight chain extenders and/or crosslinkers

   in the presence of

   d) blowing agents,

   e) catalysts

   f) at least one bromine-containing flame retardant and, if desired,

   g) further auxiliaries and/or additives,

   wherein tribromoneopentyl alcohol is used as bromine-containing flame retardant and the crosslinking index of all compounds containing hydrogen atoms reactive toward isocyanates, including the bromine-containing flame retardant, is at least 3.0.

2. A flame-resistant rigid foam as claimed in claim 1, wherein further bromine-containing flame retardants can be used in addition to the tribromoneopentyl alcohol.

3. A flame-resistant rigid foam as claimed in claim 1 or 2, wherein the bromine-containing flame retardant comprises at least 80 % by weight of tribromoneopentyl alcohol.

4. A flame-resistant rigid foam as claimed in any of claims 1 to 3, wherein the proportion of the bromine-containing flame retardant, based on the total mixture, is from 2 to 15 % by weight, preferably from 4 to 8 % by weight.

5. A flame-resistant rigid foam as claimed in any of claims 1 to 4, wherein further flame retardants not containing bromine can be used in addition to the bromine-containing flame retardants.

6. A process for producing flame-resistant rigid foams based on isocyanate by reacting

   a) organic and/or modified organic polyisocyanates with

   b) at least one compound containing hydrogen atoms reactive toward isocyanates and, if desired,

   c) low molecular weight chain extenders and/or crosslinkers

   in the presence of

   d) blowing agents,

   e) catalysts

   f) at least one bromine-containing flame retardant and, if desired,

g) further auxiliaries and/or additives,

wherein tribromoneopentyl alcohol is used as bromine-containing flame retardant and the crosslinking index of all compounds containing hydrogen atoms reactive toward isocyanates, including the bromine-containing flame retardant, is at least 3.0.

7.  Use of the flame-resistant rigid foam based on isocyanate as claimed in claim 1 as insulation materials.

**Revendications**

1.  Mousses ignifuges rigides à base d'isocyanate, préparables par réaction

    a) de polyisocyanates organiques et/ou organiques modifiés avec
    b) au moins un composé présentant des atomes d'hydrogène réactifs par rapport aux isocyanates et, le cas échéant,
    c) des agents d'allongement de chaîne et/ou de réticulation à poids moléculaire bas,

    en présence

    d) d'agents moussants
    e) de catalyseurs
    f) d'au moins un agent ignifuge contenant du brome ainsi que, le cas échéant,
    g) d'autres adjuvants et/ou additifs,

    caractérisées en ce qu'on utilise, comme agent ignifuge contenant du brome, de l'alcool tribromonéopentylique et en ce que l'indice de réticulation de tous les composés présentant des atomes d'hydrogène réactifs par rapport aux isocyanates, y compris l'agent ignifuge contenant du brome, est d'au moins 3,0.

2.  Mousses ignifuges rigides selon la revendication 1, caractérisées en ce qu'on peut utiliser d'autres agents ignifuges contenant du brome, en plus de l'alcool tribromonéopentylique.

3.  Mousses ignifuges rigides selon la revendication 1 ou 2, caractérisées en ce que l'agent ignifuge contenant du brome est constitué par au moins 80 % en poids d'alcool tribromonéopentylique.

4.  Mousses ignifuges rigides selon l'une quelconque des revendications 1 à 3, caractérisées en ce que la proportion d'agents ignifuges contenant du brome, par rapport à la préparation totale, est de 2 à 15 % en poids, de préférence de 4 à 8 % en poids.

5.  Mousses ignifuges rigides selon l'une quelconque des revendications 1 à 4, caractérisées en ce qu'on peut utiliser, en plus des agents ignifuges contenant du brome, d'autres agents ignifuges qui ne contiennent pas de brome.

6.  Procédé pour la préparation de mousses ignifuges rigides à base d'isocyanate par réaction

    a) de polyisocyanates organiques et/ou organiques modifiés avec
    b) au moins un composé présentant des atomes d'hydrogène réactifs par rapport aux isocyanates et, le cas échéant,
    c) des agents d'allongement de chaîne et/ou de réticulation à poids moléculaire bas,

    en présence

    d) d'agents moussants
    e) de catalyseurs
    f) d'au moins un agent ignifuge contenant du brome ainsi que, le cas échéant,
    g) d'autres adjuvants et/ou additifs,

    caractérisé en ce qu'on utilise, comme agent ignifuge contenant du brome, de l'alcool tribromonéopentylique et en ce que l'indice de réticulation de tous les composés présentant des atomes d'hydrogène réactifs par rapport aux isocyanates, y compris l'agent ignifuge contenant du brome, est d'au moins 3,0.

7. Utilisation des mousses ignifuges rigides à base d'isocyanate selon la revendication 1 comme matériau isolant.